# EUROPÄISCHE PATENTANMELDUNG

(11) **EP 0 537 471 A1**
(43) Veröffentlichungstag der Anmeldung: **21.04.1993**
(21) Anmeldenummer: 92115330.0
(22) Anmeldetag: 08.09.1992
(51) Int. Cl.: B60S 1/08

(54) **Verfahren zur Anpassung der Ansprechempfindlichkeit eines Niederschlagssensorsystems an Umgebungsverhältnisse und Sensorsystem mit einem Niederschlagssensor**

(30) Priorität: 18.10.1991 DE 4134432
(71) Anmelder: MERCEDES-BENZ AG, D-70327 Stuttgart (DE)
(72) Erfinder: Schulze, Michael, Dipl.-Phys., W-7045 Nufringen (DE); Leistenschneider, Raimund, Dipl.-Ing., W-7032 Sindelfingen (DE)

(57) **Zusammenfassung**

Mit dem Verfahren zur Anpassung der Empfindlichkeit eines Sensorsystems mit einem Niederschlagssensor zur Erfassung von Niederschlägen, insbesondere für die Steuerung eines Fahrzeug-Scheibenwischerantriebs, wird eine Vergrößerung der Ansprechempfindlichkeit bei geringer Umgebungshelligkeit und damit im besonderen Anwendungsfall eine Verbesserung der subjektiven Sichtverhältnisse bei Nachtfahrten im Regen erreicht. Es wird ferner ein entsprechendes Sensorsystem beschrieben, dessen Ansprechempfindlichkeit durch einen zusätzlichen Helligkeitssensor oder durch ein Einschaltsignal eines Lichtschalters einstellbar ist.

## Beschreibung

Die Erfindung bezieht sich auf ein Verfahren zur Anpassung der Ansprechempfindlichkeit eines einen Niederschlagssensor insbesondere für die Steuerung von Fahrzeugscheibenwischern umfassenden Sensorsystems an Umgebungsverhältnisse mit den Merkmalen des Oberbegriffs des Patentanspruchs 1 sowie auf ein insbesondere zur Durchführung dieses Verfahrens geeignetes Sensorsystem mit einem Niederschlagssensor, das die Merkmale des Oberbegriffs des nebengeordneten Patentanspruchs 6 umfaßt. Ein Verfahren mit den genannten Merkmalen ist bekannt (DE 39 26 175 C1), bei dem die Ansprechempfindlichkeit eines druckempfindlichen Niederschlagssensors bei fallender Umgebungstemperatur vergrößert wird. In derselben Druckschrift wird auch eine Vorrichtung zur Durchführung des bekannten Verfahrens beschrieben.

Es ist auch eine ebenfalls einen Regensensor zur bedarfsgerechten Aktivierung der Scheibenwischer umfassende Steuerschaltung für Scheibenwischer bekannt (DE 25 23 111 A1), in der die entsprechend verarbeiteten Signale des als Feuchtigkeitsfühler ausgeführten Sensors parallel zu einem Helligkeitssensor zusätzlich auch einen Dämmerungsschalter für die Fahrzeugaußenbeleuchtung beaufschlagen, damit dieser die Fahrzeugaußenbeleuchtung durch Anhebung seiner Schaltschwellen den Helligkeits- und Witterungsbedingungen entsprechend optimal beschalten kann.

Ferner ist eine Schaltung für einen bedarfsgerechten, von der Umgebungshelligkeit abhängigen Betrieb einer Scheinwerfer-Reinigungsanlage bekannt (DE 38 25 178 C2), die den Waschwasserverbrauch verringern soll, indem die Reinigungsanlage nur in dämmeriger oder dunkler Umgebung aktiviert wird, nicht jedoch dann, wenn die Scheinwerfer tagsüber lediglich zur besseren Wahrnehmbarkeit des Fahrzeugs eingeschaltet werden.

Schließlich ist noch eine einen optischen Niederschlagssensor umfassende Steuerschaltung für Fahrzeug-Scheibenwischer bekannt (US 4,355,271), in der der Empfangsteil des Niederschlagssensors auch auf veränderliche Umgebungshelligkeit anspricht und bedarfsweise die Fahrzeugaußenbeleuchtung einschaltet.

In der DE 35 32 199 A1 wurde bereits ein optischer Niederschlagssensor beschrieben, der einen Scheibenwischer dann einschaltet, wenn in einem total reflektierten Strahlengang zwischen Sender und Empfänger durch Regentropfen oder dgl. auf der reflektierenden, wischbaren Fensterscheibe eine Schwächung des empfangbaren modulierten Lichts bis unter einen Regler-sollwert eintritt.
Die Ansprechschwelle der Anordnung kann zum einen durch Verändern des Sollwerts geändert werden, zum anderen hängt sie von der Breite des Lichtbündels im Strahlengang sowie vor allem von der Anzahl der Reflexionen in der Fensterscheibe ab. Es wird nicht darauf eingegangen, wovon die Änderung des Sollwerts abhängen bzw. wie sie durchgeführt werden soll.

Bekanntlich empfindet ein Fahrzeugführer bei Dunkelheit selbst relativ geringe Niederschläge auf einer Fahrzeug-Windschutzscheibe subjektiv wesentlich eher als störend als bei heller Umgebung.

Die Erfindung hat daher die Aufgabe, ein vom gattungsbildenden Stand der Technik ausgehendes Verfahren anzugeben, mit dem ein sensorgesteuertes System der vorstehend erwähnten subjektiven Empfindung besser gerecht wird, sowie ein insbesondere zur Durchführung des Verfahrens geeignetes Sensorsystem anzugeben.

Diese Aufgabe wird bezüglich des Verfahrens mit den kennzeichnenden Merkmalen des Patentanspruchs 1 erfindungsgemäß gelöst.

Die kennzeichnenden Merkmale der Unteransprüche 2 - 5 geben vorteilhafte Weiterbildungen des erfindungsgemäßen Verfahrens an.

Mit den Merkmalen des nebengeordneten Patentanspruchs 6 wird ein Sensorsystem umrissen, dessen Ansprechempfindlichkeit als Reaktion auf ein bei abnehmender Umgebungshelligkeit erzeugbares Einstellsignal absenkbar ist. Es trägt daher insbesondere im Einsatz als selbsttätige Steuerung einer Fahrzeug-Scheibenwischeranlage der subjektiven Empfindung einer durch Regentropfen auf der Windschutzscheibe in dunkler Umgebung verursachten erhöhten Blendwirkung fahrzeugexterner Lichtquellen und Sichtbeeinträchtigung besser Rechnung.
Es versteht sich, daß die Fahrzeug-Scheibenwischer auch bei erhöhter Ansprechempfindlichkeit des Sensorsystems selbsttätig nur bei Vorliegen von Feuchtigkeitserfassungssignalen des Niederschlagssensors aktiviert werden können.

Die Unteransprüche 7 ff. geben vorteilhafte Ausführungsformen des erfindungsgemäßen Sensorsystems an.

Es kann ein eigener Helligkeitssensor als Signalgeber für das Einstellsignal vorgesehen oder das Einschaltsignal des Schalters für die Fahrzeugaußenbeleuchtung entsprechend ausgewertet werden, um die Schaltschwelle des Niederschlagssensorsystems abzusenken.

Sollte ein optischer Niederschlagssensor Verwendung finden, so kann dessen Empfangsteil grundsätzlich in an sich bekannter Weise auch als Helligkeitssensor mit verwendet werden. Hierzu ist eine Signalauswertung des einfallenden Lichts und Unterscheidung zwischen Fremdlicht und systemeigenem Licht erforderlich.

Weitere Einzelheiten und Vorteile gehen aus der Zeichnung zweier Ausführungsbeispiele und deren sich hier anschließender eingehender Beschreibung hervor.

Es zeigen
- Figur 1: ein Sensorsystem mit einem Helligkeitssensor zur mittelbaren Erzeugung des Einstellsignals für die Ansprechempfindlichkeit des Niederschlagssensorsy-stems,
- Figur 2: ein Sensorsystem, in dem das Einschaltsignal des Schalters für die Fahrzeugaußenbeleuchtung zur Einstellung der Ansprechempfindlichkeit ausgewertet wird.

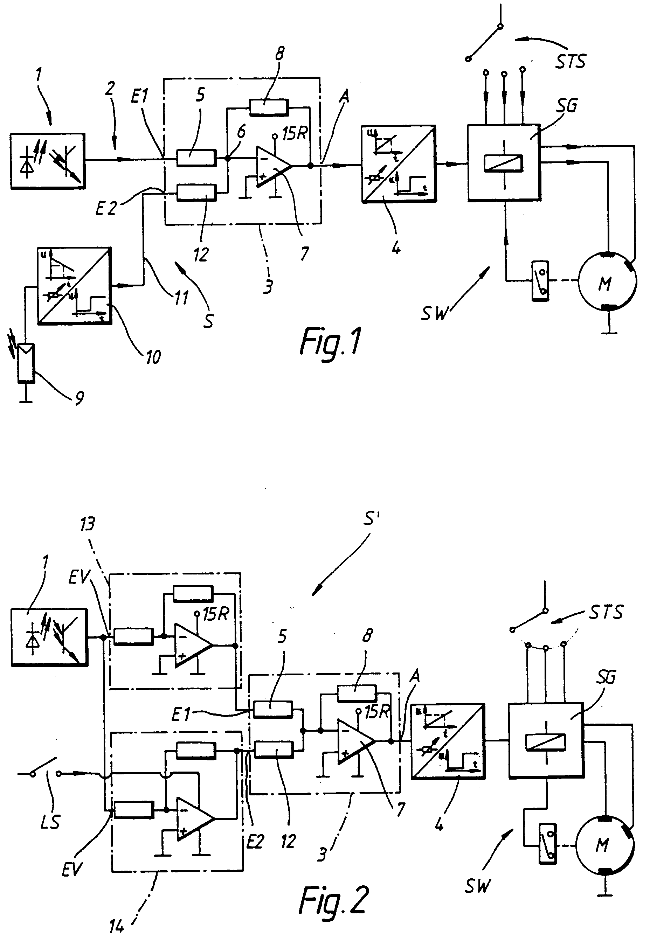

Ein Niederschlagssensor 1 beliebiger Bauart - hier als Infrarot-Reflexionssensor skizziert - ist in dem in **Figur 1** gezeigten Sensorsystem S über eine Übertragungsstrecke 2 an einen Eingang E1 eines als Addierer ausgeführten, strichpunktiert umrahmten Verstärkers 3 angeschlossen. Der Ausgang A des Verstärkers 3 ist mit einem Eingang eines Schwellwertschalters 4 verbunden, dem wiederum ein nur schematisch angedeutetes Steuergerät SG einer Kraftfahrzeug - Scheibenwischeranlage SW mit einem Motor M nachgeschaltet ist. Das Steuergerät SG hat ferner an einen manuell schaltbaren Steuerschalter STS angeschlossene Eingänge.
Es kann vorgesehen sein, daß das Sensorsystem S lediglich bei eingeschaltetem Intervallbetrieb der Scheibenwischeranlage SW die Intervallpausen bedarfsgerecht einstellt.
Die Übertragungsstrecke 2 weist eine durch einen ohmschen Widerstand 5 innerhalb des Verstärkers 3 angedeutete Eigendämpfung auf und ist über einen Knoten 6 an einen invertierenden Eingang eines Operationsverstärkers 7 angeschlossen. An den Knoten 6 ist ferner eine Rückkopplungsstrecke mit einem Widerstand 8 vom Ausgang des Operationsverstärkers 7 angeschlossen. Somit ist der Verstärkungsfaktor für die Signale des Niederschlagssensors gleich dem Verhältnis des Widerstandes 8 zum Widerstand 5.

Ein die Umgebungshelligkeit erfassender Helligkeitssensor 9 ist über ein Schwellwert-Schaltelement 10 und eine Übertragungsstrecke 11 mit einer durch einen Widerstand 12 angedeuteten Eigendämpfung über einen Eingang E2 mittelbar ebenfalls an den Knoten 6 innerhalb des Verstärkers 3 angeschlossen.
Es versteht sich, daß die beiden Schwellwertschalter 4 und 10 in der üblichen Weise jeweils einstellbar und mit einer geeigneten Hysterese ausgeführt sind.

Abweichend von der gezeigten getrennten Ausführung der beiden Sensoren 1 und 9 kann der Empfangsteil des optischen Niederschlagssensors 1 auch in an sich bekannter Weise als Helligkeitssensor mitbenutzt werden, wenn eine geeignete Signalverarbeitung vorgenommen wird.
Umgebungslicht zeigt in der Regel ein quasistatisches Verhalten, d. h. Änderungen spielen sich verhältnismäßig langsam ab, so daß die Umgebungshelligkeit einen ausfilterbaren, nur langsam veränderlichen Grundanteil am Ausgangssignal des Niederschlagssensors hat. Fällt dieser unter einen bestimmten Wert ab, so kann auf dunkle Umgebung geschlossen werden.
Demgegenüber wird das systemeigene Infrarot-Licht abgesehen von seinem gegenüber dem Umgebungslicht kleineren Spektrum vorzugsweise gepulst, schon um durch Fremdlichteinfall bedingte Fehlschaltungen des Sensors zu vermeiden.

Der Helligkeitssensor 9 erzeugt, wie vorstehend angedeutet, an seinem Ausgang ein auf die momentane Umgebungshelligkeit reagierendes, dieser annähernd proportionales analoges Ausgangssignal, d. h. je mehr Licht auf ihn fällt, desto höher ist seine Ausgangsspannung und umgekehrt. Das Schwellwert-Schaltelement 10 schaltet nun dem Knoten 6 bei einer bestimmten, unterhalb des Tageslichtwertes liegenden Schaltschwelle seines Eingangssignals ein positives Einstellsignal auf, welches einer gleichzeitig anliegenden Signalspannung des Niederschlagssensors vor dem invertierenden Eingang des Operationsverstärkers 7 addiert wird.

Das bedeutet, daS die Schaltschwelle des Operationsverstärkers 7 des Sensorsystems S gegenüber einem vom Niederschlagssensor 1 kommenden Eingangssignal herabgesetzt wird und daß das System in dunkler Umgebung wunschgemäß früher als bei Tageslicht auf von dem Niederschlagssensor 1 erfaßte Niederschläge anspricht. Selbstverständlich kann ein allein von dem Helligkeitssensor 9 stammendes Eingangssignal des Operationsverstärkers 7 aufgrund entsprechender elektrischer Dimensionierung der Übertragungsstrecken und Ausgangspegel die Scheibenwischeranlage SW nicht aktivieren. Vorliegen eines Niederschlagssignals ist hierzu vielmehr Voraussetzung.
Bedarfsweise könnte auch eine nicht dargestellte schalttechnische Sicherung in Gestalt einer in die Übertragungsstrecke 11 einzuschleifenden UND-Verknüpfung der Signale vom Niederschlagssensor 1 einerseits und vom Schwellwert-Schaltelement 10 andererseits vorgesehen werden.

Das vorstehend beschriebene Ausführungsbeispiel beeinflußt die Ansprechempfindlichkeit des Sensorsystems in nur einer Umschaltstufe. Es sind natürlich auch Ausführungen möglich, in denen eine kontinuierliche Anpassung der Ansprechempfindlichkeit entsprechend dem analogen Eingangssignal des Helligkeitssensors vorgenommen wird.

Ein abgeändertes Sensorsystem S' zeigt **Figur 2**, in der gegenüber Figur 1 gleich gebliebene Schaltelemente wie der Niederschlagssensor 1, die Scheibenwischeranlage SW und der Verstärker 3 mit gleichen Bezugszeichen versehen sind.
Hier wird jedoch anstelle der Auswertung von Helligkeitssignalen eines eigenen Sensors das Einschaltsignal eines Lichtschalters LS für die Fahrzeugaußenbeleuchtung (Klemme 58) ausgewertet.

Diese Lösung ist einfach und plausibel, weil Fahrzeugführer in der Regel als Reaktion auf das Einsetzen der Dunkelheit das Licht einschalten.
Die Schaltung weist nunmehr zwei weitere, ähnlich wie der Verstärker 3 aufgebaute Verstärker-Schaltelemente 13 und 14 auf, deren Ausgänge jeweils an die Eingänge E1 bzw. E2 des Verstärkers 3 angeschlossen sind. Letzterer arbeitet nach wie vor als Addierer.
Im Unterschied zu diesem haben die Verstärker-Schaltelemente 13 und 14 nur je einen Signaleingang EV, die hier beide mit dem Ausgang des Niederschlagssensors 1 verbunden sind.
Der Verstärker 3 wird, wie schon gemäß Figur 1, über den nur als Klemmenbezeichnung 15R angedeuteten Betriebsschalter (Zubehörstellung, bedarfsweise auch Zündung ein) des Fahrzeugs mit Spannung versorgt, ebenso das Verstärker-Schaltelement 13. Hingegen wird das Verstärker-Schaltelement 14 nur bei eingeschalteter Fahrzeugaußenbeleuchtung über den Lichtschalter LS mit Spannung versorgt.

Die dargestellte Schaltung hat die Wirkung, daß bei in heller Umgebung (= Fahrzeugbeleuchtung ausgeschaltet) anliegendem Ausgangssignal des Niederschlagssensors 1 zunächst nur das Verstärker-Schaltelement 13 arbeitet. Am Addierer/Verstärker 3 liegt dann nur ein Eingangssignal (Eingang E1) zur Verstärkung an. Wird nun der Lichtschalter LS geschlossen, so arbeitet zusätzlich das Verstärker-Schaltelement 14, das dasselbe Eingangssignal hat wie das gleichartige Schaltelement 13. Es liefert nun das Einstellsignal zur Erhöhung der Ansprechempfindlichkeit. Mithin wird am Addierer/Verstärker 3 auch der zweite Eingang aktiv, und entsprechend wird die Ansprechempfindlichkeit des Sensorsystems 2 erhöht.

Bei dieser Lösung muß offensichtlich kein Fehlschalten aufgrund anliegender Helligkeitssignale verhindert werden, allerdings ist hier die bedarfsgerechte Anpassung an die Umgebungsverhältnisse Einstellung abhängig von der willkürlichen Betätigung des Lichtschalters LS.

## Patentansprüche

1. Verfahren zur Anpassung der Ansprechempfindlichkeit eines einen Niederschlagssensor, insbesondere für die Steuerung von Fahrzeug-Scheibenwischern, umfassenden Sensorsystems an Umgebungsverhältnisse in Abhängigkeit von einem elektrischen Signal eines Schaltelements,
**gekennzeichnet durch**
Vergrößerung der Ansprechempfindlichkeit des Sensorsystems in Abhängigkeit vom Vorliegen eines bei gegenüber dem Tageslicht abnehmender Umgebungshelligkeit erzeugbaren elektrischen Einstellsignals.

2. Verfahren nach Anspruch 1,
**dadurch gekennzeichnet,**
daß das Einstellsignal wenigstens mittelbar durch einen Helligkeitssensor bei einer vorbestimmten Umgebungshelligkeit (Schaltschwelle) erzeugt wird.

3. Verfahren nach Anspruch 1,
**dadurch gekennzeichnet,**
daß das Einstellsignal durch Einschalten der Fahrzeugaußenbeleuchtung erzeugt wird.

4. Verfahren nach Anspruch 2 oder 3,
**gekennzeichnet durch**
Vergrößerung der Ansprechempfindlichkeit des Sensorsystems in einer Stufe beim Anliegen des Einstellsignals.

5. Verfahren nach Anspruch 1,
**gekennzeichnet durch**
kontinuierliche Vergrößerung der Ansprechempfindlichkeit des Sensorsystems bei abnehmender und Verkleinerung bei zunehmender, von einem Helligkeitssensor erfaßter Umgebungshelligkeit.

6. Verfahren nach Anspruch 2 oder 5,
**dadurch gekennzeichnet,**
daß ein Empfangsteil eines optischen Niederschlagssensors gleichzeitig als Helligkeitssensor verwendet wird, indem durch Signalfilterung der Anteil der Umgebungshelligkeit an seinem Ausgangssignal erfaßt und ausgewertet wird.

7. Sensorsystem, insbesondere zur Steuerung eines Scheibenwischerantriebs eines Kraftfahrzeugs, mit einem Niederschlagssensor und einer bestimmten, mittels durch ein Schaltelement erzeugter elektrischer Signale an Umgebungsverhältnisse anpaßbaren Ansprechempfindlichkeit auf Ausgangssignale des Niederschlagssensors,
insbesondere zur Durchführung des Verfahrens nach Anspruch 1,
**gekennzeichnet durch**
ein in Reaktion auf eine gegenüber dem Tageslicht abnehmende Umgebungshelligkeit aktivierbares Schaltelement (10; 14) zur Erzeugung eines die Ansprechempfindlichkeit des Sensorsystems (S; S') erhöhenden Einstellsignals.

8. Sensorsystem nach Anspruch 7,
**gekennzeichnet durch**
einen dem Niederschlagssensor (1) zur Verstärkung von dessen Ausgangssignalen nachgeschalteten Verstärker (3), welchem das Einstellsignal des Schaltelements (10; 14) zur Beeinflussung seiner Schaltschwelle zuführbar ist.

9. Vorrichtung nach Anspruch 7 oder 8,
**dadurch gekennzeichnet,**
daß das Schaltelement (10) durch ein Ausgangssignal eines Helligkeitssensors (9) zur Erfassung der Umgebungshelligkeit aktivierbar ist, wenn das Ausgangssignal eine schaltschwelle passiert.

10. Vorrichtung nach Anspruch 7 oder 8,
**dadurch gekennzeichnet,**
daß das Schaltelement (14) durch ein Einschaltsignal eines Schalters (LS) für die Fahrzeugaußenbeleuchtung aktivierbar ist.
